# EUROPÄISCHE PATENTSCHRIFT

(11) **EP 1 213 986 B1**
(45) Veröffentlichungstag und Bekanntmachung des Hinweises auf die Patenterteilung: **09.04.2003**
(21) Anmeldenummer: 00966029.1
(22) Anmeldetag: 15.09.2000
(51) Int. Cl.: A47J 31/20

(54) **ZUBEREITUNGSGERÄT UND BEUTEL FÜR AUFGIESSBARE GETRÄNKE UND VERFAHREN ZUR ZUBEREITUNG**
PREPARATION DEVICE AND BAG FOR INFUSIBLE BEVERAGES AND METHOD FOR THE PREPARATION OF THE SAME
APPAREIL DE PREPARATION ET SACHET POUR BOISSONS INFUSEES ET PROCEDE DE PREPARATION

(30) Priorität: 17.09.1999 DE 19944605; 07.06.2000 DE 10027766
(43) Veröffentlichungstag der Anmeldung: 19.06.2002
(73) Patentinhaber: Langbauer, Werner, 83355 Grabenstätt (DE)
(72) Erfinder: Langbauer, Werner, 83355 Grabenstätt (DE)
(74) Vertreter: Bergmeier, Werner, Dipl.-Ing.
(86) Internationale Anmeldenummer: EP0009043
(87) Internationale Veröffentlichungsnummer: WO01021049

(56) Entgegenhaltungen:
- EP-A- 0 615 714
- EP-A- 0 627 186
- DE-A- 2 652 399
- DE-A- 4 429 130
- GB-A- 509 740
- US-A- 4 608 916
- US-A- 5 027 696

## Beschreibung

Die Erfindung betrifft eine Einrichtung zum Herstellen von aufgießbaren Getränken, insbesondere aufbrühbaren Heißgetränken bzw. Suppen oder dergleichen, wie Tee oder Kaffee oder auch schnell- oder sofortlöslichen Getränken und Flüssigkeiten, wobei die Einrichtung einen Flüssigkeitsbehälter und einen darin, vorzugsweise vertikal verfahrbaren, aber auch drehbaren Korb zur Aufnahme eines Aufgießgutes aufweist, sowie ein Verfahren zum Herstellen von aufgießbaren Getränken, insbesondere aufbrühbaren Heißgetränken. Alternativ kann auch der Aufguß von Kaltgetränken und gekühlten Flüssigkeiten ermöglicht werden.

Durch die DE 196 05 067 A1 ist eine Einrichtung zum Herstellen von Teeaufguß bekannt. Ziel der Einrichtung ist es, einen Teeaufguß mit vollem Aroma in Trinkstärke in ausschließlich großtechnischem Maßstäb herzustellen. Der hergestellte Teeaufguß soll anschließend in Getränkeflaschen oder in Getränkepackungen oder dergleichen abgefüllt werden. Es ist dabei vorgesehen, den Teeaufguß mit anderen geschmacksgebenden Bestandteilen, z.B. Fruchtsäften zu vermischen.

Unter großtechnischem Maßstab wird ein Volumen von ungefähr 8000 bis 10.000 Litern bei ungefähr 160 bis 200 kg Teemischung verstanden. Gemäß diesem Dokument werden 8000 bis 10.000 Liter heißes Wasser in einen Tank eingelassen. Die Teemischung (160 - 200 kg) wird in einem Inlett auf einem Korb positioniert. Nach Befüllung des Tanks wird der Korb mit dem Inlett bis zum Boden des Tanks abgesenkt und während der Brühzeit vollständig innerhalb des Tanks auf- und abbewegt. Anschließend wird der ent-. standene Teeaufguß abgefüllt. Insbesondere ist beabsichtigt, daß der Teeaufguß abkühlt und im abgekühlten Zustand direkt abgefüllt wird. Alternativ wird der erkaltete Tee vor der Abfüllung als Bestandteil eines Mischgetränks als Fertiggetränk eingesetzt. Hierzu wird der Teeaufguß nach Filtration bevorzugt mit Fruchtsaftkonzentraten, Aromen und mit Wasser zusätzlich versetzt.

in Folge der größtechnischen Ausrichtung ist diese Einrichtung für einen Einsatz in der Systemgastronomie, Büro oder Haushalt völlig ungeeignet. Dieser Einsatz sieht insbesondere Flüssigkeitsmengen von einzelnen Tassen oder Mengen von 1 bis ca. 10 Liter vor. Hierbei soll - im Gegensatz zur Offenbarung der DE 196 05 067 A1 - beispielsweise einem oder mehreren Teetrinkern ein heißer und geschmacklich ausgereifter Tee angeboten werden. Die Zubereitung von insbesondere grünem Tee erfordert eine sehr genaue und sorgfältige Vorgehensweise, da beispielsweise das Teewasser für die optimale Freisetzung der Wirk- und Geschmacksstoffe aus den Teeblättern in der Regel ca. 80° Celsius betragen sollte. Bei kochendem Wasser ist der Anteil der Bitterstoffe deutlich erhöht, wodurch der grüne Tee sowohl an gesundheitsfördernden Wirkungen also auch an Geschmacksqualität enorm verliert.

Darüber hinaus gibt es zahlreiche Automaten zum Kaffee- und Teebrühen, die für die Zubereitung, insbesondere von grünem Tee, in der Systemgastronomie völlig ungeeignet sind. Deshalb müssen z.B. bei Tagungen oder Seminaren usw, die Teilnehmer ihren Tee nach wie vor durch Aufbrühen eines Teebeutels mit in Thermoskannen bereitgestelltem heißem Wasser selbst zubereiten.

Aus der DE 44 29 130 A1 ist eine Vorrichtung zum Zubereiten von Kaffee und/oder Teegetränken in einem flüssigkeitsaufnehmenden Behälter bekannt. In die Flüssigkeit taucht eine Filterkapsel ein, in welcher das Filtergut aufgenommen wird. Die Filterkapsel wird mittels einer Antriebseinheit rotierend angetrieben. Das Wasser wird bis zum Erreichen des Siedepunktes erhitzt und anschließend der Heizstrom abgeschaltet oder zum Warmhalten herabgesetzt. Nachteilig bei diesem Gerät ist es, daß nicht sichergestellt wird, daß die komplette Flüssigkeit das Filtergut umströmt. Auch durch die Rotationsbewegung der Filterkapsel wird Flüssigkeit, welche sich weit von der Filterkapsel entfernt in dem Behälter befindet nicht oder nur wenig in Kontakt mit dem Filtergut gebracht. Darüber hinaus wird unabhängig von dem Filtergut das Wasser stets bis zum Siedepunkt erhitzt. Eine individuelle Steuerung in Abhängigkeit des Siedeguts ist nicht vorgesehen.

Aus der GB-A-507740 ist ein manuell betriebenes Gerät aus dem Jahr 1938 bekannt (vgl. Oberbegriff des Anspruchs 1), in welchem ein Behälter mit Filtergut in einen Flüssigkeitsbehälter eingetaucht und ebenfalls rotiert wird. Das Eintauchen des Behälters in die Flüssigkeit ist hierbei auch über eine Handkurbel möglich. Gleiches gilt für das Herausnehmen des Filtergutbehälters aus dem Flüssigkeitsbehälter. Ebenso wie bei der zuvor genannten Druckschrift des Standes-der Technik ist auch hier eine Umströmung des Filtergutes mit der kompletten Flüssigkeit in dem Flüssigkeitsbehälter nicht gewährleistet. Nach dem Eintauchen des Filtergutbehälters in den Flüssigkeitsbehälter erfolgt lediglich eine Drehbewegung des Filtergutbehälters in der Flüssigkeit. Nachdem der Bediener des Gerätes der Ansicht ist, daß die Brühzeit erreicht ist, bewegt er die Handkurbel in entgegengesetzter Richtung und somit den Filtergutbehälter aus der Flüssigkeit heraus. Es ist weder eine Steuerung noch eine Abstimmung der Bewegung des Filtergutbehälters oder der Temperatur der Flüssigkeit, insbesondere nicht in Abstimmung mit dem Filtergut vorgesehen. Auch die Ausbeute des Filtergutes ist nicht optimiert.

Aus der EP 0 615 714 A1 ist ein handbedientes Gerät zur Erzeugung von Getränken gezeigt. In das Gerät wird ein wasserdurchlässiger Getränkebeutel eingebaut, welcher mit einer Handbewegung an einem Schaft des Gerätes in einen Behälter eingeführt wird. Nach einer bestimmten Ziehzeit ist vorgesehen, daß das Handgerät auf den Boden des Flüssigkeitsbehälters bewegt wird, so daß das Wasser durch die Flüssigkeitspackung hindurchströmt. Anschließend ist das Getränk fertig. Nachteilig bei dieser Vorrichtung ist, daß durch die handbediente Getränkeherstellung eine gleichbleibende und wiederholbare Qualität des Brühgutes nicht sichergestellt werden kann. Außerdem wird durch die Kartuschen, in welchen sich das Brühgut befindet, die Durchströmung des Brühguts nicht gleichmäßig ermöglicht. Eine Temperaturabstimmung und damit ein Eingehen auf unterschiedliche Anforderungen unterschiedlicher Brühgüter ist ebenfalls nicht vorgesehen.

Ausgehend von diesem Stand der Technik ist es Aufgabe der Erfindung, verschiedenste Aufgußgüter, wie beispielsweise vielfältige Teesorten (z.B. Grüntee, diverse Kräutertees etc.) insbesondere in der Gastronomie bzw. Systemgastronomie, aber auch im Büro oder Haushalt schnell und mit einer optimalen Entfaltung der Aufguß-Extrakte automatisch herzustellen, wobei die Ausbeute der verwendeten Aufgußgüter (z.B. Teeblätter) gesteigert werden soll. Daneben sollen je nach Bedarf unterschiedliche Mengen an zubereiteten Aufgüssen bereitgestellt werden.

Die Aufgabe wird gelöst mittels einer Einrichtung gemäß den Merkmalen des Anspruchs 1 sowie mittels eines Verfahrens gemäß Anspruch 21. Vorteilhafte Ausgestaltungen der Erfindung sind in den Unteransprüchen beschrieben.

Die Einrichtung zum Herstellen von aufgießbaren Heiß- oder Kalt-Getränken bzw. Suppen oder dergleichen, insbesondere Tee und Kaffee, besitzt einen Flüssigkeitsbehälter zur Aufnahme von Flüssigkeit und einen bewegbaren Korb zur Aufnahme eines Aufgießgutes.

Die Erfindung ist dadurch gekennzeichnet, daß der Abstand des Korbes zur Innenwandung des Behälters derart ausgebildet ist, daß bei Bewegung des Korbes-die Flüssigkeit im Behälter vollständig in den Korb eintritt oder sogar vorteilhafterweise im wesentlichen vollständig durch den Korb hindurchtritt zur gezielten Durch- bzw. Umflutung des Aufgießgutes. Ziel der Erfindung ist es, einen Aufguß-Automaten herzustellen, der vorzugsweise grünen Tee, aber auch jegliche weitere Teesorten sowie jegliche weitere Aufgußgüter optimal umflutet, so daß die Geschmacksstoffe und gesundheitsfördernden Substanzen aus den Blättern in möglichst kurzer Brüh- bzw. Aufgußzeit mit maximaler Ausbeute gelöst werden. Außerdem kann beispielsweise die hoch qualitative Zubereitung des Tees mit einer sehr geringen Menge Teeblätter stattfinden, wodurch zusätzlich ein sehr gutes Kosten-Nutzen-Verhältnis erreicht wird.

Im Gegensatz zum genannten Stand der Technik, der eine Teezubereitung im großtechnischen Maßstab lehrt, wird zur Erreichung des Teegeschmacks eine sehr gute Ausbeute der Teeblätter erzielt durch die Um- bzw. Durchflutung der Teeblätter. Damit die Flüssigkeit im Behälter (1 bis ca. 10 Liter) gut die Geschmacksstoffe aus den Teeblättern spült, wird die Flüssigkeit komplett durch den verfahrenden Korb geleitet. Dies wird vorteilhafterweise dadurch erreicht, daß der seitliche Abstand zwischen Korb und Behälterwandung sehr gering ausgebildet ist.

Der Stand der Technik (DE 196 05 067 A1) lehrt hingegen, daß zwischen dem Korb und der Innenwandung des Behälters mit ungefähr 8.000 Liter Fassungsvermögen ein Abstand von mindestens 5 cm bis 10 cm zwischen dem Korb und der Innenwandung ausgebildet ist. Dieser Zwischenspalt verhindert eine optimale Ausbeutung des Teeguts, da nach wie vor Flüssigkeit durch diesen Rand hindurchtritt bzw. hindurchtreten muß, um den Korb zu bewegen. Dieser umlaufende Spalt ist zwingend erforderlich, da ansonsten der Korb mit 160 bis 200 kg Tee sich nicht mühelos in dem Tank bewegen ließe. Durch diesen Spalt tritt beim Absenken und Hochheben des schweren Korbes die Flüssigkeit mit einer turbulenten und schwallartigen Strömung, da beispielsweise beim Hochheben des Korbes die Teeblätter im Korb aufeinandergepreßt werden und einen Durchtritt des Wassers durch den Korb unmöglich machen, da die Korböffnungen mit den übereinander liegenden Teeblättern verstopft werden. Darüber hinaus ist gemäß des Standes der Technik nicht beabsichtigt die Teeblätter optimal "auszubeuten". Es kommt hierbei nicht auf eine volle Entfaltung der Geschmacksstoffe an, da nach der Teeherstellung der Tee sowieso mit einem anderen Fruchtsaft noch vermischt wird. In der Regel werden für eine derartige Tee-Saft-Mischung keine besonders qualitativen Teesorten verwendet.

Im Behälter kann der Korb mit dem Teegut vertikal, beispielsweise linear verfahren, oder auch um eine Drehachse, die vorzugsweise senkrecht ausgebildet ist, bewegt werden. Der Korb ist so gestaltet, daß die Flüssigkeit im Behälter gut durch den Korb treten kann und z.B. das Teegut intensiv umspülen kann. Befindet sich das Aufgußgut (z.B. Tee) lose in dem Korb, so wird er beim Absenken des Korbes aufgrund seines Strömungswiderstandes durcheinandergewirbelt und bei der Bewegung des Korbes nach oben wird der Tee an den Boden des Korbes gepreßt. Dies sorgt für eine besonders gute Ausbeute des Aufgußgutes. Befindet sich das Aufgußgut in einem Beutel in dem Korb, so ist dieser Effekt nicht so ausgeprägt, dafür ist aber die Entsorgung des Aufgußgutes nach dem Aufgießen und die Reinigung des Korbes wesentlich einfacher. Ist der Korb um eine vertikale Achse drehbar gelagert, und führt er insbesondere kontinuierliche, wechselnde oder alternierende Drehbewegungen aus, wobei der Korb oder dessen Einsatz ebenfalls so geformt ist, daß das Aufgußgut optimal durchströmt wird (beispielsweise als Kreissegment), so ist auch hiermit eine gute Ausbeute des Aufgußgutes zu erzielen..

Im Unterschied hierzu befindet sich gemäß DE 196 05 067 A1 derartig viel Teegut im Träger mit einem hohen Eigengewicht, daß das Teematerial nicht ausgiebig umspült wird, da infolge der Masse des Teeguts sehr große Mengen von übereinanderliegenden Teeblättern zusammengedrückt und -gequetscht werden.

In einer Weiterbildung der Erfindung ist der Zwischenraum zwischen Korb und Behälterwandung mit einer, vorzugsweise umlaufenden, Dichteinrichtung versehen. Durch diese Dichteinrichtung wird der nahezu vollständige Durchtritt des Wassers durch den Korb wesentlich erreicht und eine höhere Ausbeute der Teeblätter erzielt.

Damit beim Hochfahren und Absenken des Korbes die Flüssigkeit den Korb fast vollständig durchflutet, ist vorteilhafterweise eine Dichteinrichtung im oberen und/oder unteren Bereich des Korbes angeordnet. Diese Dichteinrichtung beispielsweise eine Dichtlippe kann aufgrund ihrer Elastizität eventuell gegebene Unebenheiten in der Behälterwandung gut ausgleichen, so daß das Wasser nahezu vollständig durch den Korb fließt.

Ebenso wird als Lösung der Aufgabe d.h. zur schnellen und effizienten Herstellung von Aufgußgetränken vorgeschlagen, an der Einrichtung einen Antrieb oder eine Hydraulik zur gezielten oder gesteuerten Bewegung des Korbes auszubilden. Die Hydraulik ermöglicht eine vorbestimmte lineare Bewegung des Korbes, vorzugsweise in vertikaler Richtung, die außerdem gegenüber dem Stand der Technik eine größere mechanische Stabilität und Zuverlässigkeit besitzt. Infolge der Robustheit der Hydraulik kann das Getränkezubereitungsgerät in der Systemgastronomie gut eingesetzt werden. Zudem läßt sich hiermit ein einfacher Aufbau von z.B. einer Tee- bzw. Kaffeemaschine verwirklichen.

Als Antrieb kann ebenfalls ein Motor, insbesondere E-Motor, verwendet werden, der mittels Kurbel oder Spindel den Korb bewegen, d.h. heben und senken oder drehen kann. Die Drehung des Korbs kann in eine Richtung erfolgen oder alternieren.

Um zu verhindern, daß geschmacksverändernde Substanzen; beispielsweise Öl aus einer Ölhydraulik ins Aufgußmedium gelangen, ist die Hydraulik beispielsweise als Wasserhydraulik ausgebildet. Außerdem ist Wasser als Medium sehr günstig.

In einer Weiterbildung ist die Wasserhydraulik an einen Wasseranschluß anschließbar bzw. angeschlossen. Beispielsweise kann die Hydraulik an den in Gebäuden vorhandenen üblichen Wasseranschluß angeschlossen werden. Es ist daher kein zusätzlicher Wasserdruck als der eines Hausanschlusses erforderlich. Das Aufgußgerät kann somit überall aufgestellt und betrieben werden.

Ist die Seitenwandung des Korbes zusätzlich undurchlässig für die Flüssigkeit ausgebildet, wird die Strömung beim Verfahren des Korbes ausschließlich durch den Korb geleitet. Alternativ kann die Seitenwandung auch siebartig gegittert und somit durchlässig sein, wobei hierbei die Dichteinrichtung vorzugsweise an der Korbunterseite angebracht ist um die "Zwangsdurchströmung" durch den Korb zu gewährleisten.

Außerdem ist vorgesehen, daß der Korb selbst Unterteilungen, insbesondere in vertikaler bzw. Durchströmungsrichtung, aber evtl. auch in horizontaler Richtung aufweist zur Aufnahme von Aufgußgut (z.B. Tee). Durch die Unterteilungen wird erreicht, daß das Aufgußgut gleichmäßig verteilt wird und es während des Aufgußvorgangs nicht zu ungewollter Häufung des Aufgußgutes kommt, so daß eine hohe Ausbeute erreicht wird. Die Unterteilungen können auch so gestaltet sein, daß z.B. mehrere Beutel mit Aufgußgut getrennt und/oder schubladenartig neben- oder übereinander in Art verschiedener Etagen im Korb angeordnet werden können. Die Abtrennungen für die Unterteilungen sind hierfür geeigneterweise mit Durchbrechungen versehen oder sind gitterartig ausgebildet, um für einen reibungslosen Durchfluß des Aufgußmediums (vorzugsweise Wasser) zu sorgen.

Damit das Aufgußgut nicht aus dem Korb austreten und im Aufgußwasser herumschwimmen kann, ist der Korb erfindungsgemäß geschlossen ausgebildet. Der Siebkorb für das Aufgußgut ist vorteilhafterweise zylinderförmig und an der Boden- und Deckfläche gegittert bzw. mit Durchströmungsöffnungen ausgeführt. Dabei können die Seitenwände geschlossen sein, um eine seitliche Einströmung bei Auf- und Abwärtsbewegung des Korbes zu verhindern. Dies ist besonders vorteilhaft bei relativ großen Mengen des Aufgußgutes. Für Anwendungen der Erfindung im Büro oder Haushaltsbereich kann es ausreichend sein, wenn der Korb keinen Deckel aufweist. Durch die Steuerung des Korbes soll dann sichergestellt sein, daß der obere Rand des Korbes nicht unter die Flüssigkeitsoberfläche taucht und somit keine Gefahr besteht, daß das Aufgußgut in die Flüssigkeit, die später aus dem Behälter entnommen wird, ungesiebt gelangt.

Erfindungsgemäß wird die Einrichtung über eine Steuereinrichtung zur Steuerung der Aufgußherstellung in Abhängigkeit der Flüssigkeitsmenge und/oder der Flüssigkeitstemperatur und/oder der Teesorte und/oder der Brühzeit betrieben. Mittels dieser halb- oder vollautomatischen Steuerung gelingt eine zeitoptimierte Zubereitung von beispielsweise Tee, wobei bei einer vorgegebenen Teesorte eine fast vollständige Extraktion der Teesubstanzen erfolgt. Entsprechend einer gewünschten Teesorte und Wassermenge wird beispielsweise das Teewasser auf eine Temperatur erhitzt, die zu einer bestmöglichen Extraktion der Geschmacksstoffe aus den Teeblättern führt. Hierbei wird der Korb beispielsweise längs einer durch die Steuerung vorgegebenen Bewegungsrichtung hoch- und niedergeführt. Zusätzlich wird in Abhängigkeit der Wassertemperatur und Teeart die optimale Ziehzeit des Tees vollautomatisch bewirkt.

Um eine individuelle Anpassung für besonders bevorzugte Zubereitungen vorzunehmen, ist die Steuerungseinrichtung der Erfindung programmierbar bzw. bedienbar ausgebildet. Hierbei können die Parameter beispielsweise für eine Teeherstellung (Menge, Sorte, Temperatur,...) von einem Benutzer einzeln bestimmt und eingegeben werden, beispielsweise durch eine (digitale) Eingabe oder (Dreh-)Knöpfe. Zusätzlich verfügt die Steuerung über ein Reinigungsprogramm zur Säuberung bzw. Entkalkung des Behälters oder der Anlage. Es können auch einzelne Einstellungsvorschläge, beispielsweise zu bestimmten Sorten, auch bereits fest programmiert und somit vorgegeben werden. Somit kann eine menügeführte, z.B. LCD-Textdisplay-Steuerung zum einfachen Bedienen geboten werden.

Mittels der Steuerung beispielsweise ist der Hub des Korbes während des Brühens derart bestimmbar, daß bei einer vorbestimmten Flüssigkeitsmenge im oberen Hubumkehrpunkt des Korbes der Boden des Korbes im Bereich der Flüssigkeitsoberfläche angeordnet ist. Hierdurch wird verhindert, daß z.B. bei einer geringeren Wassermenge als die maximale, der Korb nicht den maximalen Hub durchlaufen muß, wodurch eine Verfälschung der Brühzeit verursacht würde. Darüber hinaus können auf diese Weise kleinere Mengen Aufguß in der kürzest möglichen Zeit zubereitet werden.

Um das Aufgußmedium in dem Behälter vor dem Aufguß optimal zu erwärmen, ist eine Heizung, vorzugsweise am Boden des Behälters, vorgesehen. Zur Zubereitung von beispielsweise Tee wird kaltes Wasser in den Behälter eingefüllt und anschließend erhitzt. Hingegen offenbart die DE 196 05 067 A1, daß vor der Herstellung des Tees heißes Wasser in den Tank mit einem Fassungsvermögen von ca. 8.000 Liter eingelassen wird. Die Erwärmung des Wassers in einem derart großen Becken, stellt an die großtechnische Herstellung erhebliche konstruktive Anforderungen und ist deshalb in diesem Fall nicht vorgesehen. Gemäß der Erfindung kann allerdings kaltes Wasser in den Behälter eingelassen werden und anschließend durch z.B. ein oder mehrere Heizelemente am Behälterboden und/oder der Behälterwandung oder eine andere Heizung leicht und schnell erwärmt werden. Die Erwärmung und Zubereitung des Aufgußmediums (z.B. Wasser) bzw. Aufgußproduktes (z.B. Tee) geschieht somit in nur einem Behälter. Um die Wärmeverluste gering zu halten, ist die gesamte Einrichtung bzw. der Behälter mit einer Isolierung ausgestattet. Für eine schnelle Entleerung des Behälters kann dieser zumindest am Boden über eine konische Form verfügen. Damit ist auch die Reinigung des Behälters vereinfacht, da sich Verschmutzungen nicht in Ecken festsetzen können. Alternativ oder zusätzlich zur Heizung kann sich auch eine Kühlung, vorzugsweise im oberen Bereich der Seitenwandung des Behälters befinden. Somit können beispielsweise Heißgetränke und/oder Kaltgetränke mit einem Gerät hergestellt werden.

Darüber hinaus verfügt die Einrichtung über einen Temperatursensor zur Erfassung der Temperatur der Flüssigkeit im Behälter. Für manche Teearten zum Beispiel ist es nicht erforderlich, daß das Teewasser zum Kochen gebracht wird. Dies gilt beispielsweise für grünen Tee, der insbesondere bei ca. 80° Celsius seine gesundheitsfördernden Wirk- und Geschmacksstoffe am besten entfaltet. Bei kochendem Wasser (100° Celsius) ist der Anteil der Bitterstoffe im grünen Tee deutlich höher, wodurch der Tee enorm an Geschmacksqualität einbüßt. Der Temperatursensor ist vorteilhafterweise mit der Steuerung verbunden und übermittelt an diese die Temperatur des Teewassers, so daß mittels der Erfindung es möglich ist, grünen Tee auf schonende Weise leicht und schnell herzustellen.

Um das Aufgußprodukt nach der Zubereitung warm oder auch kalt zu halten, ist der Behälter verschließbar, vorzugsweise mit einem Deckel. Der Deckel hat außerdem die Funktion, Fremdkörper oder Fliegen oder dergleichen fern zu halten. Außerdem wird ein wirksamer Schutz vor dem gegebenenfalls kochend heißen Wasser ermöglicht.

Desweiteren ist es besonders vorteilhaft, wenn die Einrichtung einen Sensor aufweist zur Feststellung, ob der Behälter geschlossen ist. Dieser Sensor stellt eine weitere Sicherheitseinrichtung dar, da in dem Behälter beispielsweise eine größere Menge an heißem Wasser erzeugt werden kann. Ist der Deckel des Behälters nicht vollständig aufliegend, wird durch die Steuerung die Zubereitung des Aufgusses nicht in Gang gesetzt. Erst bei vollständigem Aufliegen des Deckels wird das Aufgußmedium erwärmt.

Ferner kann die Einrichtung vorteilhafterweise über eine Anzeige oder ein LCD-Text-Display verfügen. Vorteilhafterweise ist eine Anzeige nach Fertigstellung des Aufgusses automatisch aktivierbar, so daß z.B. nach der Zubereitung eines Tees angezeigt wird, daß der Tee nunmehr ausschenkbar ist. Genauso wird während der Herstellung die Ziehzeit und/oder die Menge des Aufgußmediums (vorzugsweise Wasser) und/oder die Art des Aufgußgutes (z.B. Teesorte) etc. dem Bedienungspersonal angezeigt. Mittels der Anzeige kann ebenso einem Anwender nach einer Art Menüsteuerung bzw. -Führung mitgeteilt werden, welche Bedienungsschritte an der Maschine vorzunehmen sind oder welche Störungen aufgetreten sind.

Diese Anzeige kann sowohl ein Lämpchen, eine LCD-Textdisplayanzeige und/oder auch als eine Signaleinrichtung im weiteren Sinne (z.B. Lautsprecher etc.) ausgebildet sein. Durch die vollautomatische Steuerung der Einrichtung wird der Aufguß innerhalb einer optimierten Aufgußzeit zubereitet, so daß sich das Servicepersonal in der Zwischenzeit anderen Arbeiten widmen kann. Nach der Fertigstellung wird optisch durch die Anzeige oder/oder über eine Lampe und/oder akustisch das Servicepersonal auf das fertige Aufgußprodukt ( z.B. den fertigen Tee) aufmerksam gemacht.

Zur leichteren Positionierung der Einrichtung über einer Kanne oder einem Gefäß (z.B. Tasse), in welches das fertige Aufgußprodukt eingelassen wird, verfügt die Einrichtung über eine Aufhängungseinrichtung für den Behälter.

Weiterhin ist es von besonderem Vorteil, wenn die Einrichtung über einen Sensor zur Erfassung des Gewichts bzw. der Menge der Flüssigkeit im Behälter verfügt. Durch diesen Gewichts- bzw. Mengensensor wird die Menge des Teewassers bzw. des Aufgußmediums genau erfaßt, so daß die Steuerungseinrichtung den Herstellungsprozess in Bezug auf die Flüssigkeitsmenge und/oder der Art des Aufgußgutes (z.B. Teesorte) usw. steuert.

In einer besonders vorteilhaften Weiterbildung der Erfindung ist der Sensor zur Erfassung der Flüssigkeitsmenge durch eine Einrichtung mit Dehn-Meßstreifen, bevorzugt in einer Aufhängevorrichtung für den Behälter, ausgebildet. Über diese Dehn-Meßstreifen (DMS) wird der exakte Flüssigkeitsstand ermittelt sowohl beim Befüllen mit dem Aufgußmedium als auch beim Ablassen des Aufgußproduktes. Vor dem Befüllen wird im allgemeinen ein automatischer Null-Justier-Abgleich elektronisch durchgeführt. Es ist damit in besonders vorteilhafter und erfinderischer Weise möglich, die aktuelle Flüssigkeitsmenge in dem Behälter festzustellen, ohne daß genau der Durchfluß beim Befüllen oder Entleeren gemessen werden muß. Die Dehn-Meßstreifen sind hierfür vorteilhafterweise in einer Aufhängung des Behälters angebracht.

Insbesondere wird erfindungsgemäß vor dem Befüllen des Behälters mit Flüssigkeit eine Justierung einer Gewichtsmeßeinrichtung durchgeführt. Mittels der Meßeinrichtung wird die Menge bzw. das Gewicht des einlaufenden Aufgußmediums erfaßt und an die Steuerungs- und Regeleinheit der Einrichtung weitergeleitet. Bevor das Aufgußmedium in den Behälter eingelassen wird, wird ein Nullabgleich bzw. Justierung vorgenommen. Die Meßeinrichtung besteht beispielsweise aus einer Vorrichtung mit Dehn-Meßstreifen, die am Behälter bzw. an der Behälteraufhängung angebracht sind. Hierdurch kann exakt die Flüssigkeitsmenge überwacht werden. Ohne im Behälter befindliche Flüssigkeit kann darüber hinaus die Heizung nicht aktiviert werden.

Mittels der Gewichtsmeßeinrichtung kann ebenfalls festgestellt werden, ob Flüssigkeit aus dem Behälter entnommen wurde, so daß die Heizung oder auch Kühlung entweder aus- oder eingeschaltet wird.

Ebenso kann nach Ablassen eines Teils der Flüssigkeit die verbleibende Flüssigkeitsmenge im Behälter festgestellt werden, beispielsweise mittels der Gewichtsmeßeinrichtung. Die verbleibende Restmenge kann beispielsweise auf einer Anzeige sichtbar gemacht werden, so daß dem Servicepersonal angezeigt wird, wieviel Tee oder Flüssigkeit sich im Behälter noch befindet. Alternativ kann die Zulauf- bzw. Entnahmemenge von Flüssigkeit auch über Durchflußmengen-Meßgeräte erfolgen.

Gemäß der Erfindung wird außerdem ein Verfahren vorgeschlagen, bei dem erfindungsgemäß zur Herstellung des Getränks die Flüssigkeitsmenge im Behälter vorbestimmt und eingefüllt und/oder die eingefüllte Flüssigkeitsmenge ermittelt wird, die Flüssigkeit im Behälter auf eine vorbestimmte Temperatur erwärmt/abgekühlt wird und in Abhängigkeit der ermittelten Menge und/oder der Temperatur der Flüssigkeit und/oder der Art des Aufgießgutes die Brüh- bzw. Aufgußzeit festgelegt wird. Hierdurch wird eine volle Geschmacksentfaltung von Aufgußgütern wie z.B. Tee unter Berücksichtigung einer besonders günstigen und schonenden Zubereitungsart erzielt. Die einzelnen Parameter, die für eine optimale Zubereitung maßgebend sind, können entweder programmtechnisch, beispielsweise aufgrund von Erfahrungswerten hinterlegt sein und von dem Programm abgerufen werden, oder sie werden jeweils von dem Bediener individuell eingegeben. Es kann auch jeweils von dem Gerät ein Vorschlag abgegeben werden, der entweder von dem Bediener bestätigt oder verändert wird.

Von Vorteil ist es ferner, wenn in Abhängigkeit der gewählten und/oder ermittelten Flüssigkeitsmenge und/oder der Flüssigkeitstemperatur und/oder der Art des Aufgießgutes die Bewegungsstrecke des Korbes festgelegt wird. Ist der Behälter nicht maximal mit Aufgußmedium gefüllt, so durchfährt der Korb vorzugsweise eine kleinere Strecke als bei maximalem Flüssigkeitsstand. Dies sorgt dafür, daß eine Geschmacksentfaltung des Aufgußgutes (z.B. Teeblätter) bei einer relativ geringen Menge erzielt wird, indem sich das Aufgußgut während der Aufgußzeit permanent im Aufgußmedium befindet und somit dauerhaft umspült wird.

Für die Bereitstellung von beispielsweise warmem Tee wird nach Herstellung des Getränks festgestellt, ob Flüssigkeit dem Behälter entnommen wird. Darüber hinaus wird in Abhängigkeit dieser Feststellung und/oder der aktuellen Temperatur des Tees die Heizung am Behälter aus- oder eingeschaltet. Hierdurch wird stets warmer Tee zum Ausschenken bereitgehalten. Bei Nichtentnahme von Flüssigkeit bzw. bis zur vollständigen Entnahme wird der fertige Tee bei einer vorbestimmten Temperatur aufbewahrt. Falls es erforderlich ist, wird die Heizung ein- oder ausgeschaltet. Analoges gilt für beispielsweise Kaltgetränke und deren Kühlung mittels einer am Behälter angebrachten Kühlung.

In einer Weiterbildung der Erfindung wird vor Aufheizen der Flüssigkeit geprüft, ob der Behälter geschlossen ist. Es wird somit sichergestellt, daß für das Bedienungspersonal keine Gefahr durch beispielsweise heißes Wasser im Behälter besteht. Außerdem kann das Aufgußmedium vor Verschmutzung geschütztwerden.

Vorteilhaft ist es auch, wenn nach Herstellung des Getränks der Korb mit dem Aufgießgut aus der Flüssigkeit bewegt wird und das Ende der Herstellung beispielsweise optisch und/oder akustisch angezeigt wird. Somit kann das Servicepersonal, das sich während des Herstellungsvorgangs mit anderen Arbeiten beschäftigt, darauf hingewiesen und aufmerksam gemacht werden, daß der Aufguß (z.B. Tee oder Kaffee) vollständig zubereitet ist und nun serviert werden kann. Das Herausfahren des Korbes aus der Flüssigkeit stellt sicher, daß keine geschmacklichen Veränderungen durch eine weitere Auslaugung des Aufgußgutes (z.B. Teeblätter) erfolgt, wodurch beispielsweise bei Grüntee lediglich mehr Bitterstoffe ausgeschwemmt werden würden und den Tee geschmacklich stark bis zur Ungenießbarkeit verändern würden.

Weiterhin ist es sinnvoll für das Bedienungspersonal, wenn während der Herstellung des Aufgusses die verbleibende Aufgießzeit bzw. Herstellungszeit bis zum Herstellungsende angezeigt wird. Durch diese Information erfährt das Servicepersonal, wann der Aufguß fertig zum Servieren und Ausschenken ist, so daß das Servicepersonal entscheiden kann, ob in der verbleibenden Zwischenzeit andere Arbeiten vorgezogen werden können.

Außerdem ist es von Vorteil, daß der Korb für das Aufgießgut mittels einer Wasserhydraulik bewegt wird. Die Wasserhydraulik kann an ein bestehendes Wassernetz in einem Gebäude angeschlossen werden. Außerdem besitzt die Hydraulik den Vorteil, daß keine geschmacksverändernden Stoffe, wie Öle oder Fette, die Aufgußzubereitung verändern bzw. verderben.

Die Einrichtung zur Zubereitung von beispielsweise Tee ermöglicht eine individuelle Zubereitung für verschiedene Teesorten und Geschmacksrichtungen im Gastronomie-, Büro- und Heimbereich, wobei die Herstellung automatisch erfolgt. Trotz dieses selbsttätigen Zubereitens werden auf schonende und effektive Weise Tees bei voller Entfaltung der Geschmacksstoffe hergestellt. Die Zubereitung von grünem Tee erfordert eine sehr genaue und sorgfältige Vorgehensweise, die nunmehr mit der Erfindung verwirklicht wird.

Anhand von nachfolgenden Ausführungsbeispielen wird die Erfindung näher erläutert. Es zeigt:
- **Figur 1**: eine Einrichtung zur Aufgußzubereitung in einem vertikalen Schnitt,
- **Figur 2**: einen Korb mit Deckel in perspektivischer Ansicht,
- **Figur 3**: einen Korb ohne Deckel und mit einem Einsatz mit horizontalen und vertikalen Unterteilungen,
- **Figur 4**: eine skizzierte erfindungsgemäße Einrichtung in Seitenansicht,
- **Figur 5**: ein Behälter mit einem alternativen Korb und Bewegungsmechanismus.

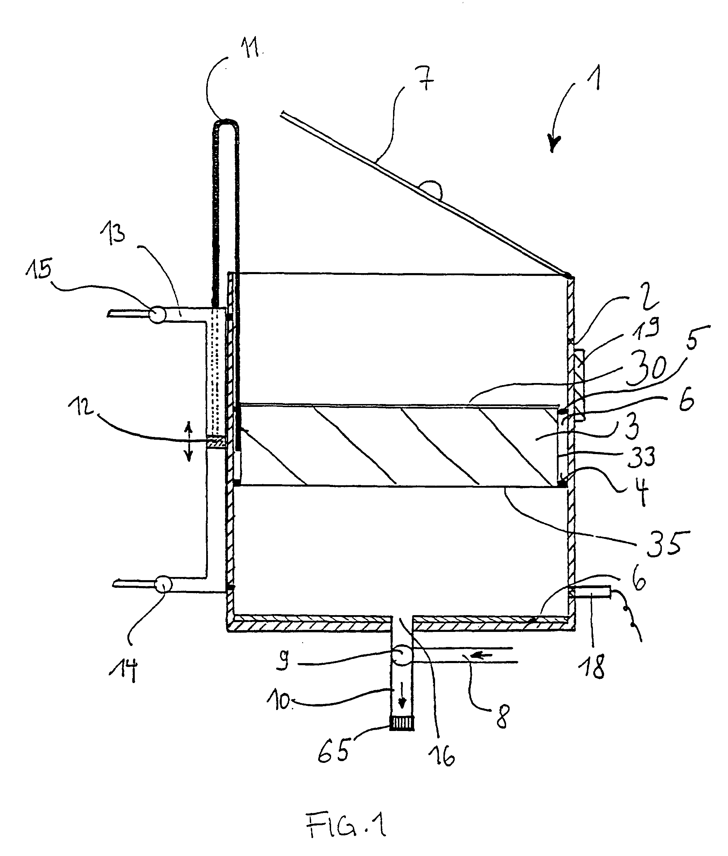

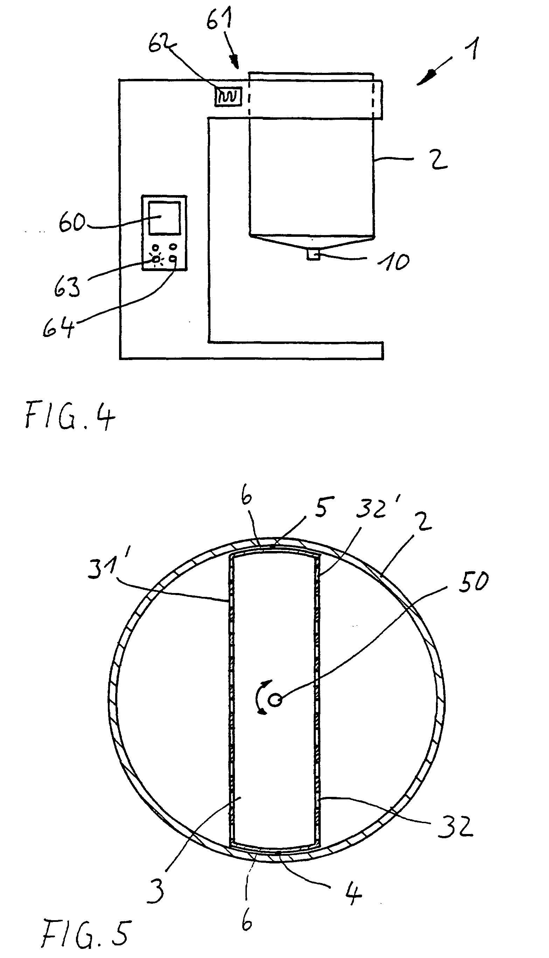

Figur 1 zeigt eine Teezubereitungsmaschine 1 mit einem Behälter 2, in dem ein Korb 3 angeordnet ist. Der Behälter 2 besitzt ferner einen Deckel 7, der schwenkbar gelagert ist. Alternativ kann der Deckel 7 auch von Hand auf den Behälter 2 aufsetzbar sein. Im Bereich des Bodens des Behälters 2 ist eine Heizung 6 angeordnet, die beispielsweise aus von außen oder innen am Boden und/oder auch seitlich an der Behälterwand angebrachten Heizwendeln oder anderen Heizelementen besteht. Alternativ oder zusätzlich zur Heizung kann auch eine Kühlung 19, vorzugsweise im oberen Bereich der Seitenwandung, angebracht sein. Der Behälter 2 besitzt eine im wesentlichen zylinderartige Form und wird beispielsweise aus Stahl hergestellt. Zumindest der Boden kann auch einseitig oder symmetrisch konisch ausgebildet sein (vgl. Figur 4). Dies erleichtert und beschleunigt das Abfließen der Flüssigkeit aus dem Behälter 2 und dessen Reinigung.

Der Behälter 2 kann zur leichtereh Reinigung am Boden abgerundet sein und z.B. umlaufend runde Ecken besitzen. Des weiteren kann der Behälter 2 gegen einen schnellen Energieaustausch mit der Umgebung mit einer Isolierung versehen sein.

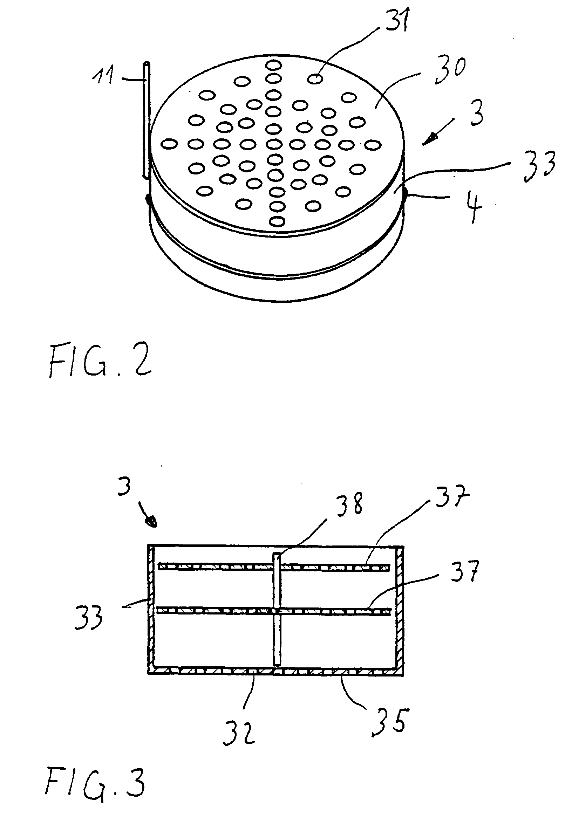

Der Korb 3 besitzt eine geschlossene Seitenwandung 33 und auf der Oberund Unterseite eine gitterartige Fläche 30, 35 mit Öffnungen 31 und 32. In den Korb 3 wird eine vorportionierte Menge an Aufgußgut gegeben, die bei einer Auf- und Abbewegung des Korbes 3 vom Aufgußmedium umflutet und durchflutet werden. Insgesamt werden die Geschmacksstoffe beispielsweise bei der Teezubereitung dadurch fast vollständig aus den Teeblättern herausgelöst. Das Aufgußgut befindet sich vorzugsweise in einem oder mehreren der später beschriebenen Aufgußbeutel. Die Oberseite ist in Figur 2 als abnehmbarer Deckel 30 ausgebildet. Dadurch wird ein ausschwemmen des Aufgußgutes vermieden.

Alternativ kann der Korb 3 auch auf der Unter- oder gegebenenfalls auch auf der Oberseite eine feinmaschige, siebartige Fläche aufweisen. In diesen Korb kann somit auch beispielsweise nicht vorportionierter, offener Tee oder auch Kaffee in loser Form gegeben werden. Bei oben offener Korbversion (beispielsweise Figur 3) gilt die Besonderheit, daß beim Herstellungsvorgang verfahrenstechnisch, beispielsweise über eine Micro-Prozessor-Steuerung oder mechanische Anschläge, die Korboberkante nicht unter die Flüssigkeitsoberfläche gerät, damit das Aufgußgut nicht ungesiebt in die Flüssigkeit gelangt. Dies ist vorzugsweise für Anwendungsfälle einsetzbar, bei denen kleinere Mengen (z.B. 1,5 Liter) Aufguß zubereitet werden sollen, wie beispielsweise für Haushalts- oder Büromaschinen.

In einer in Figur 3 dargestellten Weiterbildung des Korbs 3 besitzt dieser mehrere abgetrennte Bereiche zur Aufnahme von Aufgußgut, so daß der Korb über mehrere über- und/oder nebeneinander durchströmbare Etagen bzw. Sektionen verfügt. Das Aufgußgut (z.B. Tee) kann dadurch exakt z.B. mittels Aufgußbeutel (ein oder mehrere Stück) entsprechend der Wassermenge portioniert werden, so daß sehr wirtschaftlich Tee oder anderer Aufguß hergestellt wird. Die abgetrennten Bereiche gestatten eine gleichmäßige Verteilung und verhindern eine Anhäufung von einer großen Menge Aufgußgut, die nicht mehr ausreichend gut umspült wird. Die Abtrennung erfolgt mittels eines Einsatzes in dem Korb 3 mit horizontalen und/oder vertikalen Unterteilungen 37,38.

Alternativ kann im Korb 3 zur schnelleren und besonders einfachen Entnahme der beispielsweise ausgelaugten Teeblätter auch ein geschlossenes Gewebenetz mit der gleichen Menge an Teeblättern in den Korb eingelegt werden.

Der seitliche Zwischenraum zwischen dem Behälter 2 und der Seitenwandung des Korbes 3 ist mit einer, grundsätzlich in beliebiger Höhe der Seitenwandung des Korbes 2 angeordneten Dichtung 4, 5 versehen. Die Dichtung 4, 5 ist beispielsweise als Dichtlippe umlaufend über den gesamten Umfang des Korbes ausgebildet. Die Dichtung 4, 5 besteht vorteilhafter Weise aus einem elastischen, beispielsweise gummiartigen Stoff. In einer Alternative der Erfindung kann eine Vielzahl von Dichtungen am Korb 3 ausgebildet sein. Es kann aber auch vorgesehen sein, daß auf Grund von engen Spalten im Zwischenraum 6 zwischen Seitenwandung 33 des Korbes 3 und der Innenwandung des Behälters 3 auf eine Dichtung ganz verzichtet wird, wenn auch hierdurch die wesentliche Strömung durch den Korb 3 selbst stattfindet.

Am Boden des Behälters 2 befindet sich eine Öffnung 16 mit einem Ventil 9, das den Zulauf des Aufgußmediums, vorzugsweise Wasser aus einem Wasserzulauf 8 bei entsprechender Stellung des Ventils 9 ermöglicht. Durch den Zulauf 8 wird das Aufgußmedium in den Innenraum des Behälters 2 eingebracht. Nachdem eine bestimmte Menge in den Behälter 2 geleitet wurde, wird die Öffnung 16 mittels des Ventils 9 verschlossen. Anschließend erwärmt die Heizung 6 die Flüssigkeit im Behälter 2. Alternativ oder zusätzlich zur Heizung 6 kann auch eine Kühlung 19, vorzugsweise im oberen Bereich der Seitenwandung, angebracht sein.

Ebenso ist ein getrennter Zulauf und Ablauf am Behälter 2 realisierbar. Am Ablauf selbst kann zusätzlich ein Sieb 65 zur Ausfilterung von Schwebeteilchen oder dergleichen und zum spritzfreien Ablassen des Getränkes angeordnet sein.

Die Temperatur der Flüssigkeit wird mittels eines Temperatursensors 18 festgestellt. Beim Erreichen einer vorgewählten oder vorbestimmten Temperatur wird die Heizung 6 (oder auch Kühlung 19) abgestellt und der Korb 3, der während der Erwärmung komplett oder z.B. programm- oder produktabhängig ganz oder teilweise oberhalb der Flüssigkeitsoberfläche angeordnet war, wird in das Aufgußmedium eingelassen.

Überdies kann die Temperatur der Flüssigkeit und des Behälters 2 anhand eines Thermostats am oder im Behälter 2 überwacht werden.

Zusätzlich kann am Behälter 2 ein Sensor ausgebildet sein, der feststellt, ob der Deckel 7 umgeklappt ist und der Behälter 2 geschlossen ist. Erst danach wird das Aufgußmedium erhitzt, so daß keine Gefahr für das Bedienpersonal bei gegebenenfalls kochendem Wasser und offenem Behälter besteht.

Nach Herstellung des Aufgusses wird der Korb 3 aus dem Aufgußmedium herausgefahren und im oberen Bereich des Behälters 2 angeordnet. Die Fertigstellung des Aufgusses wird dem Bedienungspersonal durch eine optische und/oder akustische Signalanzeige, beispielsweise LCD-Text-Display 60 und/oder Signallampe 63 (Figur 4), angezeigt. Mittels des Ventils 9 kann der fertige Aufguß über einen Ablauf 10 in Kannen oder Tassen abgefüllt werden, vorzugsweise in festlegbaren Mengen. Hierzu ist es vorteilhaft, wenn der Ablauf 10 oberhalb des abzufüllenden Gefäßes angeordnet ist. Geeigneterweise wird der Behälter 2 deshalb bevorzugt an einer in Figur 4 lediglich schematisch dargestellten Aufhängungsvorrichtung 61 eines weitgehend beliebig gestaltbaren Rahmens mit Gehäuse angebracht.

Weiterhin ist es möglich, daß durch Sensoren und einer geeigneten Steuerung überwacht wird, ob fertiger Aufguß aus dem Behälter 2 entnommen wurde. Wird längere Zeit kein Aufguß in Kannen oder Tassen abgefüllt, so kann die Steuerung die Heizung 6 / Kühlung 19 einschalten, um den Aufguß für eine längere Zeitdauer warm/kühl zu halten.

Um beispielsweise einen bekömmlichen und geschmackvollen Tee mit relativ wenig Teeblättern bei einer verhältnismäßig großen Wassermenge herzustellen (optimiertes Kosten-Nutzen-Verhältnis), wird der Korb 3 in den Behälter 2 vertikal auf- und abwärts gefahren. Die umlaufende Dichtung 4, 5 bzw. Dichtlippe am Korb 3 oder auch entsprechend enge Toleranzen im Zwischenraum 6 zwischen Korb 2 und Behälter 3 bewirkt, daß die gesamte Flüssigkeit bzw. Strömungsflüssigkeit, die durch die Vertikalbewegung des Korbes 3 entsteht, im wesentlichen ausschließlich durch die Querschnittsfläche des Korbes 3 fließt. Hierdurch wird eine maximale Um- und Durchflutung der Teeblätter im Korb 3 erzielt.

Am Korb 3 ist seitlich ein U-förmiger Bügel 11 angebracht, der über den Behälter 2 hinausragt und mittels einer Aqua-Hydraulik bewegt wird. Das andere Ende des Bügels 11 ist mit einem Kolben 12 versehen, der in einem Rohrzylinder 13 linear beweglich angeordnet ist. Am oberen bzw. unteren Ende des U-förmigen Rohres 13 sind Magnetventile 14, 15 angeordnet, an die ein (konventionelles) Wassernetz angeschlossen ist. Mittels des Rohrzylinders 13, des Kolbens 12, und der beispielsweise an einen herkömmlichen Wasseranschluß angeschlossenen Ventile 14, 15 wird eine Aqua-Hydraulik ausgebildet, die je nach Stellung der Ventile 14, 15 den Kolben 12 vertikal bewegt. Durch die Bewegung des Kolbens 12 wird hierdurch auch der am anderen Ende des Bügels 11 angeordnete Korb 3 vertikal abgesenkt und hochgehoben.

Der Korb 3 bewegt sich während einer von einer Steuerung vorgegebenen und von der Teesorte abhängigen Ziehzeit mehrmals ständig auf und ab, wobei beispielsweise bei Tee- oder Kaffee-Aufguß eine maximale Ausbeute von Aroma und Wirkstoffen der Teeblätter/des Kaffeemehls erzielt wird.

Das Teezubereitungsgerät 1 besitzt weitere Sensoren zur Feststellung der Flüssigkeitsmenge bzw. -gewichts, die vorzugsweise mit der zentralen Steuerung verbunden sind. Hierzu sind am Behälter 2 ein oder mehrere Dehn-Meßstreifen 62 ausgebildet. Über diese Elemente kann der exakte Flüssigkeits-Füllstand im Behälter 2 ermittelt werden. Außerdem erlauben diese Meßstreifen 62 einen automatischen Null-Justier-Abgleich vor Befüllen des Gefäßes 2. Durch die Flüssigkeitsmenge (vorzugsweise Wasser) wird der Herstellungsprozess des Aufgusses maßgeblich beeinflußt.

Daneben können die Dehn-Meßstreifen 62 in einer Weiterbildung an einem Träger 61 (z.B. Tragrahmen, Aufhängung) für die Einrichtung 1 angeordnet sein.

Desweiteren weist die Steuerung Eingabefelder 64 auf, die es einem Bediener ermöglichen beispielsweise eine bestimmte Wassermenge, Teesorte und eventuell Aufgußzeit vorzuwählen. In Abhängigkeit der geschmacksund wirkstoffbeeinflussenden Herstellungsparameter ermittelt die Steuerung die Aufgußzeit bzw. die Hubstrecke des Korbes 3 im Behälter 2. Selbstverständlich ist es ebenso möglich, neben abgespeicherten Zubereitungsmenüs die Steuerung individuell vom Bedienungspersonal zu konfigurieren bzw. programmieren.

Darüber hinaus kann die Steuerung auch über ein Reinigungsprogramm zur Reinigung des Behälters 2 und des Korbes 3 zusätzlich verfügen.

Zur Reinigung, aber auch für verschiedene Anwendungsfälle, wie beispielsweise Suppen und Tee, aber auch für den Betrieb mit offenem Aufgußgut oder mit Aufgußgut in Beuteln kann der Korb 3 auswechselbar angeordnet sein. Auch die Verwendung verschiedener Einsätze in dem Korb 3 ist manchmal vorteilhaft um eine optimale Anpassung an unterschiedliche Beutel oder offene Ware zu ermöglichen.

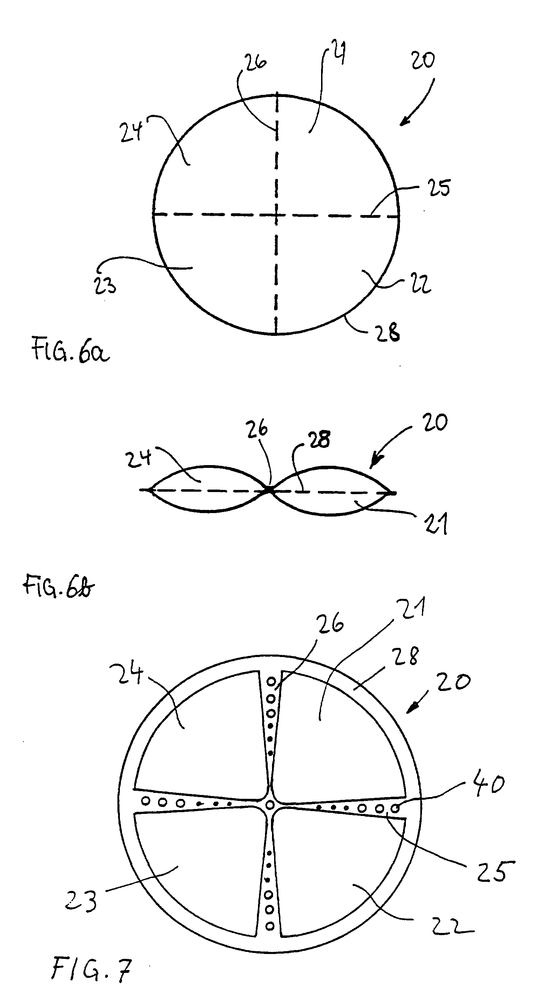

In Figur 5 ist eine weitere Alternative zu der Ausführung gemäß Figur 1 in Draufsicht gezeigt. Hierbei dreht sich der entsprechend anders gestaltete Korb 3 um eine Drehachse 50, die beispielsweise von einem Motor angetrieben ist. Die Drehung kann alternierend oder auch gleichbleibend erfolgen. Zwischen Behälter 2 und Korb 3 ist eine Dichtung 4 und 5 angeordnet, so daß die wesentliche Strömung durch den Korb 3 mit seinen entsprechenden Öffnungen 31' und 32' erfolgt. Die Dichtungen 4 und 5 sind hierbei vertikal angeordnet. Bei ausreichend engem Spalt 6 kann eventuell auch auf die Dichtungen 4 und 5 verzichtet werden.

Ein wesentlicher Vorteil des erfindungsgemäßen Aufgußgerätes besteht darin, daß Personal in Betrieben mit Systemgastronomie die Aufgußzubereitung (vorzugsweise Tee- oder Kaffeezubereitung) erleichtert wird. Durch die automatische Herstellung von beispielsweise Tee, insbesondere Grünem Tee, unter Berücksichtigung eines sehr guten Kosten-Nutzen-Verhältnisses bei optimaler Ausbeute von Teeblättern und eines hochqualitativen Teeaufgusses besteht die Möglichkeit und Bereitschaft, die Erfindung in Systemgastronomien einzusetzen. Jede Teesorte oder auch jegliches weiteres Aufgußprodukt kann mit ihrer/seiner spezifisch optimalen Zubereitung. (Wassertemperatur mit gegebenenfalls sogar wechselndem Temperaturverlauf und/oder Ziehzeit und/oder Durchflutung) hergestellt werden.

Darüber hinaus ist für die Aufgußzubereitung ein Einsatz der Erfindung nicht nur für den Gastrobereich (10 Liter) sondern auch für Haushalte und Büros (1 bis 2 Liter) realisierbar. Insbesondere die bisher komplizierte Zubereitung von Grünem Tee, oder beispielsweise weiteren kompliziert zubereitbaren Kräutertees kann mit der Erfindung gewissermaßen revolutionär vereinfacht und komfortabel gemacht werden.

Auch eine Herstellung von Kaffee bzw. Filterkaffee oder anderen Aufbrühoder -gußgütern wird ebenfalls möglich. Das erfindungsgemäße Brühen besitzt im Gegensatz zum üblichen Durchlauf-Verfahren bei der Filterkaffee-Herstellung den Vorteil eines wesentlich höheren Kosten-Nutzen-Verhältnisses sowie eine höhere Aroma-Ausbeute. Für die Kaffeezubereitung wird folglich weniger Kaffeemehl benötigt. Zudem wird ein größeres Aroma entfaltet. Die Zubereitung ist äußerst einfach, schnell und komfortabel.

Um mehrere Aufgußgüter, wie beispielsweise verschiedene Teesorten o. ä. bereitzustellen, kann eine erfindungsgemäße Maschine mit verschiedenen Vorratsbehältem in Verbindung stehen. Nachdem eine Sorte hergestellt wurde, wird diese in den dafür vorgesehenen Vorratsbehälter eingefüllt und bis zur Entnahme des Tees eventuell warmgehalten dort aufbewahrt. Gleiches kann mit der nächsten Teesorte und weiteren Vorratsbehältern geschehen.

Neben den gezeigten und beschriebenen Ausführungsbeispielen sind selbstverständlich auch andere Ausführungen durch die vorliegende Erfindung abgedeckt.

Insbesondere für den Betrieb in beispielsweise Kantinen oder Büros und auch für die Herstellung einzelner Portionen können die einzelnen Schritte der Getränkeherstellung und der Bereitstellung der Maschine für die nächste Anforderung automatisiert werden. Hierzu ist es erforderlich oder zumindest vorteilhaft, wenn ein Portionsbeutel mit Aufgußgut automatisch oder manuell dem Korb 3 zugeführt und nach Herstellung des Getränkes wieder automatisch entsorgt, das heißt beispielsweise automatisch in einen Abfallbehälter aasgeworfen wird. Die Herstellung kann dabei entsprechend des beanspruchten Verfahrens und mit der erfinderischen Einrichtung erfolgen.

Die oben beschriebenen Anwendungsfälle, in denen Tee oder eine andere bestimmte Getränkeart erwähnt wurde, können selbstverständlich auch auf jedes andere Aufgußgut, also auch Kaltgetränke, Drinks, Suppen oder ähnliches angewandt werden.

## Patentansprüche

1. Einrichtung (1) zum Herstellen von aufgießbaren Getränken, insbesondere aufbrühbaren Heißgetränken bzw. Suppen oder dergleichen, wie Tee oder Kaffee, wobei die Einrichtung einen Flüssigkeitsbehälter (2) und einen vertikal bewegbaren Korb (3) zur Aufnahme eines Aufgießgutes aufweist,
**dadurch gekennzeichnet,**
**daß** der Korb (3) einen mit Durchströmöffnungen versehenen Boden und Deckel aufweist,
**daß** der Zwischenraum (6) zwischen dem Korb (3) und der Innenwandung des Behälters (2) im wesentlichen abgedichtet ist,
**daß** bei vertikaler Bewegung des Korbes (3) die Flüssigkeit des Behälters (2) durch den Boden und den Deckel des Korbes (3) hindurchtritt zur gezielten Durch- bzw. Umflutung des Aufgießgutes, und
**daß** die Einrichtung (1) eine programmierbare Steuereinrichtung zur Steuerung der Getränkeherstellung in Abhängigkeit der Flüssigkeitsmenge und/oder Flüssigkeitstemperatur und/oder Teesorte und/oder Brüh- bzw. Aufgußzeit aufweist.

2. Einrichtung (1) nach Anspruch 1, **dadurch gekennzeichnet, daß** die Flüssigkeit im wesentlichen vollständig durch den Korb (3) hindurchtritt.

3. Einrichtung (1) nach einem der vorherigen Ansprüche, **dadurch gekennzeichnet, daß** der Korb (3) um eine vertikale Achse drehbar gelagert ist, um kontinuierliche, wechselnde oder alternierende Drehbewegungen auszuführen.

4. Einrichtung (1) nach einem der vorherigen Ansprüche, **dadurch gekennzeichnet, daß** der Zwischenraum zwischen Korbrand und Behälterinnenwandung mit einer vorzugsweise im oberen und/oder unteren Bereich des Korbes (3) angeordneten, insbesondere umlaufenden Dichteinrichtung (4, 5) versehen ist.

5. Einrichtung (1) nach einem der vorherigen Ansprüche, **dadurch gekennzeichnet, daß** zur Bewegung des Korbes (3) ein Antrieb oder eine Hydraulik, insbesondere eine Wasserhydraulik vorgesehen ist.

6. Einrichtung (1) nach einem der vorherigen Ansprüche, **dadurch gekennzeichnet, daß** die Wasserhydraulik an einen Wasseranschluß anschließbar bzw. angeschlossen ist.

7. Einrichtung (1) nach einem der vorherigen Ansprüche, **dadurch gekennzeichnet, daß** die Seitenwandung des Korbes (3) weitgehend undurchlässig ist.

8. Einrichtung (1) nach einem der vorherigen Ansprüche, dadurch pekennzeichnet, daß der Korb (3) horizontale Unterteilungen, vorzugsweise für vertikale Auf- und Abwärtsbewegungen und/oder vertikale Unterteilungen, vorzugsweise für Drehbewegungen um eine horizontale Achse aufweist.

9. Einrichtung (1) nach einem der vorherigen Ansprüche, **dadurch gekennzeichnet, daß** der Hub des Korbes (3) während des Aufgusses so bestimmbar ist, daß bei einer vorbestimmten Flüssigkeitsmenge im oberen Hubumkehrpunkt des Korbes (3) der Boden des Korbes (3) im Bereich der Flüssigkeitsoberfläche angeordnet ist.

10. Einrichtung (1) nach einem der vorherigen Ansprüche, **dadurch gekennzeichnet, daß** der Hub des Korbes (3) während des Aufgusses so bestimmbar ist, daß bei einer vorbestimmten Flüssigkeitsmenge im unteren Hubumkehrpunkt des Korbes (3) die Oberkante des Korbes (3) oberhalb der Flüssigkeitsoberfläche angeordnet ist.

11. Einrichtung (1) nach einem der vorherigen Ansprüche, **dadurch gekennzeichnet, daß** zur Erfassung des Hubweges des Korbes (3) eine Wegerfassungs-Sensorik angeordnet ist.

12. Einrichtung (1) nach einem der vorherigen Ansprüche, **gekennzeichnet durch** eine Heizung (6), vorzugsweise am Boden des Behälters (2), zur Erwärmung der Flüssigkeit im Behälter (2).

13. Einrichtung (1) nach einem der vorherigen Ansprüche, **gekennzeichnet durch** eine Kühlung, die vorzugsweise im oberen Bereich der Seitenwandung des Behälters (2) angeordnet ist.

14. Einrichtung (1) nach einem der vorherigen Ansprüche, **gekennzeichnet durch** einen Temperatursensor zur Erfassung der Temperatur der Flüssigkeit im Behälter (2).

15. Einrichtung (1) nach einem der vorherigen Ansprüche, **dadurch gekennzeichnet, daß** der Behälter (2) vorzugsweise mit einem Deckel (7) verschließbar ist.

16. Einrichtung (1) nach einem der vorherigen Ansprüche, **dadurch gekennzeichnet, daß** die Einrichtung einen Sensor aufweist zur Feststellung, ob der Behälter (2) geschlossen ist.

17. Einrichtung (1) nach einem der vorherigen Ansprüche, **gekennzeichnet durch** eine Anzeige, insbesondere eine LCD-Displayanzeige und/oder Signaleinrichtung.

18. Einrichtung (1) nach einem der vorherigen Ansprüche, **gekennzeichnet durch** eine Aufhängungseinrichtung für den Behälter (2).

19. Einrichtung (1) nach einem der vorherigen Ansprüche, **gekennzeichnet durch** einen Sensor zur Erfassung des Gewichts bzw. der Menge der sich im Behälter (2) befindlichen Flüssigkeit.

20. Einrichtung (1) nach einem der vorherigen Ansprüche, **dadurch gekennzeichnet, daß** der Sensor zur Erfassung des Flüssigkeitsgewichts bzw. der -menge durch eine Einrichtung mit Dehn-Meßstreifen ausgebildet ist.

21. Verfahren zum Herstellen von aufgießbaren Getränken, insbesondere aufbrühbaren Heißgetränken bzw. Suppen oder dergleichen, wie Tee oder Kaffee, mit einer Vorrichtung gemäß Anspruch1, wobei in einem Behälter (2) mit Flüssigkeit ein Korb (3), der ein Aufgießgut aufnimmt, bewegt wird, **dadurch gekennzeichnet, daß** zur Herstellung des Getränks die Flüssigkeitsmenge im Behälter (2) vorbestimmt und eingefüllt und/oder die eingefüllte Flüssigkeitsmenge ermittelt wird, die Flüssigkeit im Behälter (2) auf eine vorbestimmte Temperatur erwärmt oder abgekühlt wird und in Abhängigkeit der ermittelten Menge und/oder der Temperatur der Flüssigkeit und/oder der Art des Aufgießgutes die Brüh- bzw. Aufgußzeit festgelegt wird.

22. Verfahren nach Anspruch 21, **dadurch gekennzeichnet, daß** in Abhängigkeit der gewählten und/oder ermittelten Menge und/oder der Temperatur der Flüssigkeit und/oder der Art des Aufgießgutes die Bewegungsstrecke des Korbes (3) festgelegt wird.

23. Verfahren nach einem der vorherigen Ansprüche, **dadurch gekennzeichnet, daß** nach Herstellung des Getränks festgestellt wird, ob Flüssigkeit dem Behälter (2) entnommen wird, und daß in Abhängigkeit dieser Feststellung oder zur Beibehaltung einer gewünschten Temperatur die Heizung und/oder Kühlung (6) aus- oder eingeschaltet wird.

24. Verfahren nach einem der vorherigen Ansprüche, **dadurch gekennzeichnet, daß** vor dem Befüllen des Behälters (2) mit Flüssigkeit eine Justierung einer Gewichtsmeßeinrichtung durchgeführt wird.

25. Verfahren nach einem der vorherigen Ansprüche, **dadurch gekennzeichnet, daß** während oder nach Ablassen eines Teils der Flüssigkeit die Flüssigkeitsmenge im Behälter (2) festgestellt und/oder angezeigt wird.

26. Verfahren nach einem der vorherigen Ansprüche, **dadurch gekennzeichnet, daß** vor Aufheizen der Flüssigkeit geprüft wird, ob der Behälter (2) geschlossen ist.

27. Verfahren nach einem der vorherigen Ansprüche, **dadurch gekennzeichnet, daß** nach der Herstellung des Getränks der Korb (3) aus der Flüssigkeit bewegt wird und das Ende der Herstellung angezeigt wird.

28. Verfahren nach einem der vorherigen Ansprüche, **dadurch gekennzeichnet, daß** während der Herstellung des Getränks die verbleibende Brüh- bzw. Aufgußzeit bis zum Herstellungsende und/oder die gesamte Herstellungszeit angezeigt wird.

29. Verfahren nach einem der vorherigen Ansprüche, **dadurch gekennzeichnet, daß** der Korb (3) mittels eines Antriebes oder einer Hydraulik, insbesondere Wasserhydraulik, bewegt wird.

## Claims

1. Device (1) for the production of beverages made by adding water to a base material, in particular hot drinks, soups, tea or coffee etc. Said device has a tank for the liquid (2) and a screen basket (3) which can be traveled vertically and which holds the infusion material,
and is **characterized by** the following:
The afore-mentioned screen basket (3) has a floor and lid with apertures to allow the flow of liquid;
The gap (6) between the screen basket (3) and the inside wall of the tank (2) is to a large extent sealed,
The liquid in the tank (2) flows through the lid and the floor of the screen basket (3) as the screen basket (3) is traveled vertically, thus fulfilling the aim of targeted permeation of and a better flow around the infusion material;
Furthermore, the device (1) is equipped with a programmable control system to allow adaptation of the production process to suit the amount of liquid and/or the temperature of the liquid and/or the variety of tea and/or the infusion or brewing time.

2. The device (1) as in claim 1, wherein in the main the entire liquid flows through the screen basket (3).

3. The device (1) in accordance with the above claims, wherein the screen basket (3) is pivot-mounted around a vertical axis enabling it to rotate continually, in changing or alternating directions.

4. The device (1) in accordance with the claims above, wherein the gap between the edge of the screen basket and the inside wall of the tank is fitted with a seal (4, 5), by preference attached in the upper and/or lower area of the screen basket (3), and in particular a seal running around the circumference.

5. Device (1) as in the above claims, wherein a drive or a hydraulic system is fitted, in particular a water-operated hydraulic system, to effect the movement of the screen basket (3).

6. Device (1) as in the above claims, wherein the water-operated hydraulic system is or can be connected to a water supply.

7. Device (1) as in the above claims, wherein the side walls of the said screen basket (3) are to a large extent impermeable.

8. Device (1) as in the above claims, wherein the said screen basket (3) comprises horizontal compartments, preferentially for upward and downward movements in the vertical plane and/or vertical compartments, preferentially for rotational movements around a horizontal axis.

9. Device (1) as in the above claims, wherein the movement of the said screen basket (3) during the production process can be set in such a way that with a predetermined quantity of liquid, the floor of said screen basket (3) is located in the region of the surface of the liquid at the top reversing point of the path described by said screen basket (3).

10. Device (1) as in the above claims, wherein the movement of said screen basket (3) during the infusion process can be set in such a way that with a predetermined quantity of liquid, the upper edge of said screen basket (3) is located above the surface of the liquid at the bottom reversing point of the path described by said screen basket (3).

11. Device (1) as in the above claims, wherein sensors are fitted to detect the path described by said screen basket (3) as it moves.

12. Device (1) as in the above claims, wherein a heating system (6) is fitted, by preference on the floor of the said tank (2), for heating the liquid in the tank (2).

13. Device (1) as in the above claims, wherein a cooling system is incorporated, by preference fitted in the upper area of the side walls of the said tank (2).

14. Device (1) as in the above claims, wherein a temperature sensor for monitoring the temperature of the liquid is incorporated in the said tank (2).

15. Device (1) as in the above claims, wherein the said tank (2) can be sealed by means of a lid (7).

16. Device (1) as in the above claims, wherein a sensor is incorporated to monitor whether the said tank (2) is closed.

17. Device (1) as in the above claims, wherein a display, particularly an LCD display and/or signal device are incorporated.

18. Device (1) as in the above claims, wherein a mounting bracket for the said tank (2) is incorporated.

19. Device (1) as in the above claims, wherein a sensor for the monitoring of the weight or the quantity of the liquid in the said tank (2) is incorporated.

20. Device (1) as in the above claims, wherein the said sensor for monitoring the weight or the quantity of the liquid uses strain gages.

21. A process for the creation of beverages made by the addition of liquid, in particular brewed hot beverages, soups etc., tea or coffee, by means of a device (1) as in claim 1, with a screen basket (3) containing infusion material, said screen basket (3) being traveled through a tank (2) containing liquid, wherein for the production of the beverage the amount of liquid in the said tank (2) is predetermined and the tank (2) filled and/or the tank (2) filled with liquid and the amount of liquid measured, the liquid in the said tank (2) being subsequently heated or cooled to a set temperature and the appropriate brewing or infusion time for the measured amount of liquid and/or temperature of the liquid determined and/or the type of material used for the infusion determined.

22. Process as in claim 21, wherein the path described by the said screen basket (3) in its movement is preset according to the selected and/or measured quantity and/or temperature of the liquid and/or the nature of the material used for the infusion.

23. Process as in the above claims, wherein, after production of the beverage, removal of liquid from the said tank (2) is monitored and the heating/cooling system (6) switched on or off according to the result of this monitoring process or in order to maintain the beverage at a desired temperature.

24. Process as in the above claims, wherein a weight measuring device is adjusted before filling the said tank (2) with liquid.

25. Process as in the above claims, wherein the quantity of liquid remaining in the said tank (2) is monitored and/or displayed during or after removal of some of the liquid.

26. Process as in the above claims, wherein it is ascertained whether the said tank (2) is closed before the liquid in it is heated.

27. Process as in the above claims, wherein, when the production process is complete, the said screen basket (3) is moved out of the liquid and the information that the beverage is now ready is displayed.

28. Process as in the above claims, wherein the remaining time before the end of the brewing or infusion time and thus the time remaining until the beverage is ready and/or the entire production time is displayed during the production process.

29. Process as in the above claims, wherein the said screen basket (3) is moved by means of a drive system or a hydraulic system, in particular by means of a water-operated hydraulic system.

## Revendications

1. Appareil (1) permettant la préparation d'aliments liquides les plus divers tels que soupes, thés, tisanes, café, se composant d'un récipient (2) pour le liquide et d'un panier-filtre (3) verticalement mobile pour les ingrédients à immerger (infuser) et **dont les caractéristiques sont les suivantes :**
• le panier-filtre (3) comprend un fond et un couvercle percés pour permettre l'infiltration du liquide
• l'espace (6) compris entre le panier-filtre (3) et la paroi intérieure du récipient (2) est quasiment étanche
• le liquide contenu dans le récipient (2) traverse le panier-filtre (3), penétrant par le fond pour traverser le couvercle lorsque le panier-filtre (3) est actionné vers le bas. Ce qui permet une parfaite immersion des ingrédients
• l'appareil (1) est nanti d'un programme pour la préparation des boissons en fonction de la quantité de liquide, et/ou en fonction de la température, et/ou en fonction du type de thés, et/ou en fonction du temps d'infusion.

2. Appareil (1) qui, conformément à la revendication 1, se distingue par le fait que quasiment la totalité du liquide traverse le panier-filtre (3)

3. Appareil (1) qui, conformément à une revendication antécédente, se distingue par le fait que le panier-filtre (3) est fixé d'un un axe vertical qui permet un mouvement de rotation continu, alternant ou par intervalles.

4. Appareil (1) qui, conformément à une revendication antécédente, se distingue par le fait que l'espace entre le bord du panier-filtre et la paroi intérieure du récipient est muni dans la partie supérieure ou/et dans la partie inférieure du panier (3) d'un système d'étanchéité circulaire (4, 5).

5. Appareil (1) qui, conformément à une revendication antécédente, est **caractérisé par le fait que** pour assurer le mouvement du panier-filtre (3) il est prévu une commande ou un système hydraulique, très exactement une hydraulique à eau.

6. Appareil (1) qui, conformément à une revendication antécédente, est **caractérisé par le fait que** le système aquahydraulique peut être ou, est raccordé à un robinet d'eau / à l'eau courante.

7. Appareil (1) qui, conformément à une revendication antécédente, est **caractérisé par** l'étanchéité quasiment totale de la paroi latérale du panier-filtre.

8. Appareil (1) qui, conformément à une revendication antécédente, se **caractérise par** des divisions du panier-filtre (3), soit horizontales pour les mouvements de haut en bas, soit verticales pour les mouvements de rotation autour d'un axe horizontal.

9. Appareil (1) qui, conformément à une revendication antécédente, se **caractérise par le fait que** pour une quantité de liquide définie au préalable, l'émergence du panier-filtre (3) est calculé de façon à ce que lorsque la montée du panier-filtre (3) atteind le point supérieur d'inversion du mouvement, le fond du panier-filtre (3) se trouve juste encore en contact avec la surface du liquide

10. Appareil (1) qui, conformément à une revendication antécédente, se **caractérise par le fait que** pour une quantité de liquide définie au préalable , l'immersion du panier-filtre (3) est calculé de façon à ce lorsque la descende du panier-filtre (3) atteind le point d'inversion inférieur le bord supérieur du panier-filtre (3) se trouve juste au dessus de la surface du liquide.

11. Appareil (1) qui, conformément à une revendication antécédente, se **caractérise par le fait qu'**un capteur détermine le trajet vertical que doit parcourir le panier-filtre (3) le long de d'une tige portante.

12. Appareil (1) qui, conformément à une revendication antécédente, se **caractérise par** une chauffage (6) dans le fond du récipient (2), pour chauffer le contenu liquide du récipient(2).

13. Appareil (1) qui, conformément à une revendication antécédente, se **caractérise par** un système de refroidissement dans la partie supérieure des parois latérales du récipient (2).

14. Appareil (1) qui, conformément à une revendication antécédente, se **caractérise par** un capteur thermique pour déterminer la température du liquide contenu dans le récipient (2).

15. Appareil (1) qui, conformément à une revendication antécédente, se **caractérise par** un couvercle (7) pour recouvrir (fermer) le récipient (2).

16. Appareil (1) qui, conformément à une revendication antécédente, se **caractérise par** un capteur qui reconnaît si le récipient (2) est bien fermé.

17. Appareil (1) qui, conformément à une revendication antécédente, se **caractérise par** un indicateur voyant LCD-Display et/ou un dispositif de signalement.

18. Appareil (1) qui, conformément à une revendication antécédente, se **caractérise par** un système de suspension pour le récipient (2).

19. Appareil (1) qui, conformément à une revendication antécédente, se **caractérise par** un capteur pour déterminer le poids, à savoir la quantité de liquide contenu dans le récipient (2).

20. Appareil (1) qui, conformément à une revendication antécédente, se **caractérise par le fait que** le capteur déterminant poids/quantité du liquide contenu dans le récipient (2) est équipé d'un ruban de mesure de la dilatation.

21. Principe de préparation pour tout aliment liquide, spécialement boissons chaudes ou soupes ou autre aliment analogue, tels que thés, tisanes, café, avec un équipement conformément à la revendication 1, avec lequel dans un récipient (2) contenant un liquide, on immerge un panier-filtre (3). Système qui se **caractérise par le fait que** pour la préparation de la boisson, la quantité de liquide de se trouvant dans le récipient (2) est préalablement déterminé pour être soit chauffée, soit refroidit en fonction de la quantité et/ou en fonction de la température de ce liquide, et/ou en fonction du type de l'aliment à infuser.

22. Principe de préparation, conformément à la revendication 21, qui se **caractérise par le fait que** la distance d'immersion du panier-filtre (3) est en corrélation avec la quantité de liquide choisie ou déterminée, et/ou de la température du liquide, et/ou des ingrédients.

23. Principe, conformément à une revendication antécédente, **caractérisé par le fait qu'**en fin de préparation de la boisson, il reconnaît si l'on prélève une partie de la boisson dans le récipient et qu'en fonction de cette constatation, détermine si le système chauffant/ ou le système de refroidissement (6), doit être activé ou interrompu pour maintenir le liquide restant à la température souhaitée.

24. Système, conformément à une revendication antécédente, **caractérisé par le fait qu'**il effectue un ajustement du système de mesure du poids avant le versement de liquide dans le récipient (2).

25. Système, conformément à une revendication antécédente, **caractérisé par le fait que** pendant ou après tout prélèvement de liquide, la quantité de liquide restante dans le récipient (2) est enregistrée et/ou indiquée.

26. Système, conformément à une revendication antécédente, **caractérisé par le fait qu'**il contrôle avant de chauffer le liquide si le récipient (2) est dûment fermé.

27. Système, conformément à une revendication antécédente, **caractérisé par le fait qu'**une fois la préparation de la boisson terminée, le panier-filtre (3) est à nouveau remonté et la fin de la préparation signalée.

28. Système, conformément à une revendication antécédente, **caractérisé par le fait, que** pendant tout le temps de préparation de la boisson, il indique le temps restant et/ou la totalité du temps nécessaire pour la préparation du bouillon ou de l'infusion.

29. Système, conformément à une revendication antécédente, **caractérisé par le fait que** le panier-filtre (3) est mis en mouvement par une commande ou un système hydraulique, particulièrement une hydraulique à eau.
